Europäisches Patentamt

European Patent Office

Office européen des brevets

(11) Publication number: **0 067 965**
**B1**

(12) **EUROPEAN PATENT SPECIFICATION**

(45) Date of publication of patent specification: 27.08.86

(51) Int. Cl.⁴: **B 60 R 22/18**

(21) Application number: 82104375.9

(22) Date of filing: 19.05.82

(54) Fastening arrangement including a wedge.

(30) Priority: 19.06.81 DE 3124190

(43) Date of publication of application:
29.12.82 Bulletin 82/52

(45) Publication of the grant of the patent:
27.08.86 Bulletin 86/35

(84) Designated Contracting States:
FR GB IT SE

(56) References cited:
DE-A-2 619 813
DE-A-2 850 758
DE-B-1 155 025
FR-A-1 205 536
FR-A-1 360 781
FR-A-1 583 096
US-A-2 856 202
US-A-4 167 277

(73) Proprietor: N.V. KLIPPAN S.A.
Research Park Grauwmeer 1
B-3030 Heverlee-Leuven (BE)

(72) Inventor: Weman, Per Olof
Hertogstraat 143 bus 65
B3030 Heverlee (BE)

(74) Representative: Weber, Dieter, Dr. et al
Dr. Dieter Weber und Klaus Seiffert
Patentanwälte Gustav-Freytag-Strasse 25
Postfach 6145
D-6200 Wiesbaden 1 (DE)

Courier Press, Leamington Spa, England.

### Description

The invention concerns a fastening arrangement including a locking wedge to attach fastening devices for straps and the like on a preferably thin wall in which at least one opening for receiving a holding means is provided.

In order to suspend a heavy weight on a wall, particularly a belt strap, which is highly stressed at the time of an accident, at a point in the motor vehicle on a wall, the prior art has provided nuts or threaded plates welded on the wall, e.g. on the chassis of the vehicle or on the bottom. The belt strap anchor is then screwed into these threaded holes, but special tools, like manual or power screw drivers or various sizes must be used in the assembly of the vehicle to anchor the screws firmly in the threaded holes. Apart from the necessary use of special tools, the fastening is time-consuming, because the tools are sometimes difficult to use because of the special site of the fastening. In addition, the manufacture of nuts or threaded plates, etc., to be welded-on for the preparation of a fastening site is time- and cost intensive. Many welded-on fastening sites have furthermore the disadvantage that they project to the outside and may represent hazards at the time of an accident, unless they are covered with protective caps.

This invention is particularly directed to applications in which belt straps of safety belt systems are secured on the vehicle over fittings. As a fitting can be used, e.g. a metal part with an eyelet for passing through the belt strap; according to the invention, means are to be provided to fix this fastening part in a suitable manner on the vehicle. As a fastening site is frequently used a thin wall in which an opening is provided which is to be engaged by locking parts of the mounting.

From the FR—A—1 360 781 (hereinafter referred to as "A") there is known a fastening arrangement with the above mentioned features. However, the opening is of more complicated shape, consisting of a hole of rectangular shape and an additional recess. A tongue which shall be fixed to the wall must have a thickened end which has to be put into the hole whereafter the tongue is pushed into the recess with its thinner part. The hole is then closed by a wedge, which is pushed into place to prevent the upward movement and subsequent withdrawal of the tongue.

This arrangement is more complicated than the one according to the invention. Manufacturing of the opening as well as of the thickened end of the tongue takes more time and more material for the tongue as compared to the invention. Furthermore in case of accident of a car with a thin wall it might happen, that the recess might be widening, thereby letting pass the thickened end of the tongue, because no reinforcing plate is provided according to "A". Another thing that might happen, is loosening of the wedge by vibrations caused by the motor, the street or by an accident, so that the tongue might slide into the hole, where the thickened end could pass through. This could happen, because the wedge is fixed into the opening only by its own elasticity.

From the FR—A—1 205 536 (hereafter referred to as "B") there is known a wedge with snap tongue to prevent inadvertent withdrawal from a thin wall which it is fixed to by pushing it through a hole of appropriate size. The wedge comprises a thread, where a screw can be threaded to.

To fix a tongue of a seat belt on such a wedge by means of a screw, the wedge had to be of a strong material like metal. On the other hand this wedge, according to ref. "B", is of rather complicated shape so it would not be easy to manufacture. Additionally, it would be difficult, to make a snap tongue of metal, which is strong enough and large enough to take up the forces which it is exposed to in case of an accident while at the same time comprising the elasticity to be pushed through a fitting hole.

It would therefore be desirable to provide a locking clamp or wedge of the above mentioned type which not only permits rapid assembly without special tools but which also is simpler to manufacture compared to a known prior art.

The afore-mentioned problem is solved by providing a fastening arrangement including a locking wedge and a holding device for straps and the like on a preferably thin wall in which at least one opening for receiving the wedge and the holding means is provided, the wedge preventing manipulation of the holding device which would enable it to be withdrawn through the opening, characterized in that a reinforcing plate is arranged on the side of the wall remote from the strap, which plate comprises an aperture which is aligned with the opening in the wall, that the wedge has on one side as a locking means an inclined surface and spaced therefrom a snap tongue which extends over at least a part of the inclined surface and that the aperture in the reinforcing plate is oblong, is rectangular or of U-shape and is fully filled by the holding device together with the wedge.

The holding device typically includes a tongue having an eyelet-type mounting as an anchorage point for the belt strap. Then the fastening of the mounting is achieved without additional parts projecting, except for the eyelet or tongue on which the strap belt is secured. A free space is provided between the inclined surface and the snap tongue, which permits the snap tongue to move towards the inclined surface during the assembly, which means that the locking wedge or clamp can be simply pushed into the remaining opening or aperture. In this movement the correspondingly applied snap tongue can deflect and permit the passage of the locking wedge through the desired opening, while after it has been through the opening down to the desired depth, the snap tongue snaps back and prevents a sliding movement of the locking wedge in the opposite direction.

The above-mentioned snap tongue serves as a lock of the wedge to prevent it from falling out, even in longlasting vibrations. The initial stress of the snap tongue is so adjusted that the clamping engagement and the frictional engagement are maintained. In the assembly, the snap tongue is pressed with the fingers onto the inclined surface, or this is done with a light blow with the fist or with a hammer.

A nose is preferably provided on the wedge to limit its insertion. When the wall bears on the nose after the locking wedge has been inserted, the snap tongue can snap upward away from the inclined surface, due to its spring force, because the length of the snap tongue is adapted to the corresponding installation conditions. In any case the locking wedge according to the invention prevents that even long-lasting vibrations can force the wedge to fall out from the opening.

It is also of advantage that according to the invention the aperture in the reinforcing plate is rectangular or U-shaped and fully filled by the tongue or mounting with eyelet together with the wedge. The oblong and rectangular form of the opening and/or of the recess has the advantage that the tongue mounting which has, e.g. the form of a key punched from a piece of sheet metal, can be so put through the opening or aperture that the greatest distance of the two faces from each other is less than the longitudinal extension, but greater than the transverse extension of the opening or recess. The tongue mounting can thus be turned by 90 degrees after it has been put through the opening and be so fixed in the opening that it can no longer be pulled out. The space remaining in the opening is filled out completely by the wedge to be put through, and clamped tightly. In a top view, the opening and/or recess has the form of a rectangle or of a "U".

The thin walls referred to above have a thickness of up to 2 cm. This may be a wall of any shape of sheet metal, wood, plastic, etc. so that a reinforcing plate is necessary. This reinforcing plate is so attached on the thin wall that the opening of the wall is aligned with the recess of the reinforcing plate. Even with a metal wall of only 1 to 2 mm thickness, the projections on the tongue or the mounting with the eyelet cannot be torn open, because of the reinforcing plate behind it, whose thickness can be selected as desired, preferably 5 mm or 8 mm.

One embodiment of the invention is characterized in that the inclined surface has a nose at one end, preferably at the end in that the wedge comprises a nose opposite to a snap tongue. Beyond the above-mentioned advantages, the nose offers the possibility that the respective wall into which the locking wedge was pushed, comes to bear on a sort of shoulder. When the snap tongue then snaps back in the desired manner into its position before it was inserted and before it bore on the shoulder, the position of the wall and/or reinforcing plate, on the one hand and of the locking wedge, on the other hand, is secured. But even in another embodiment without the nose, the inclined surface can be applied in such a angle that the wall or plate strikes against the inclined surface like a ramp, because the locking wedge is so wide or thick toward the side opposite the base of the snap tongue that the desired wall is fixed by wedging or clamping and friction.

Another advantageous embodiment of the invention is characterised in that the holding device comprises a tongue provided with projections and is located next to the wedge side by side, the tongue of the holding device being connected to the strap. In this way it is only necessary to introduce the tongue or the mounting with the eyelet into the opening in the wall and, if necessary, into the aperture behind it in the reinforcing plate and to turn it somewhat so that the lateral projections engage the bottom surface of the wall, thus preventing the tongue and the strap from being pulled out. Then the wedge is introduced next to it in the remaining space and clamped tightly to ensure, by the adaptation of the common outside dimension and the inner dimension of the opening, that the tongue is retained firmly by the projections on the wall and/or reinforcing plate.

According to a preferred embodiment of the invention it is provided, that the reinforcing plate and the holding device are made of sheet metal and the wedge of plastic.

By this way, the tolerances of the wedge can be corrected with advantage without jeopardizing the reliable fastening. Furthermore, this means a very cheap and simple way of manufacturing.

Fig. 1 shows a cross sectional view along line A—A of Fig. 2, representing the installed locking wedge in a fastening device which is used to anchor a safety belt in a motor vehicle.

Fig. 2 shows a section along a plane which is perpendicular to the paper plane in Fig. 1 and perpendicular to the lines representing the wall.

Fig. 3 shows a view of the locking wedge with the fastening device seen from the bottom or inside, that is, from the side of the reinforcing plate.

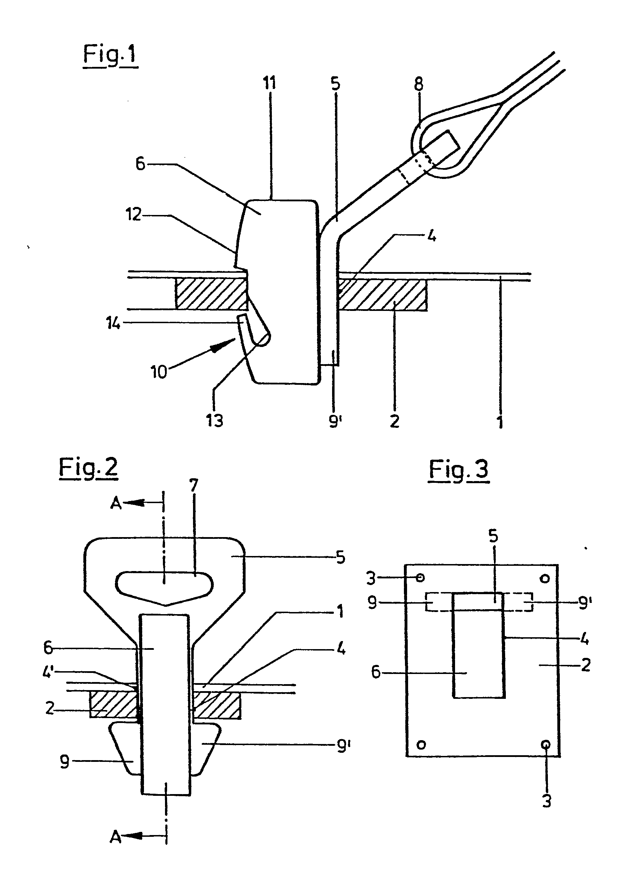

With reference to the drawings in Figs. 1 to 3 an embodiment is represented with a fastening device for the mounting portion of a seat belt tongue, that is, an anchorage point for a safety belt at a point on vehicle floor 1, which can be considered here as the general surface designated as a wall. In Figs. 1 and 2, the space above vehicle floor 1 is the inner tunnel etc. On this, the bottom side, which is the side remote of the belt strap, a reinforcing plate 2 bears on floor 1 and is joined with the latter in any expedient manner, if necessary, by screws 3 (Fig. 3).

Floor 1 has an opening 4' and reinforcing plate 2 has an aperture 4. As it can be seen from Fig. 3, aperture 4 in reinforcing plate 2 can have in this embodiment the form of a rectangle. Opening 4' in floor 1 has the same shape. The support consists in the embodiment according to Fig. 1 to 3 of a tongue 5 (also called tongue mounting) and of a locking wedge 6, the outside dimensions of these two parts being so adapted to each other and to opening 4' or aperture 4, that they fill completely aperture 4 in the assembled state.

Tongue mounting 5 is formed in this embodiment as a bent-off stamped metal piece in the form of a key which has in the upper part an aperture or eyelet 7 for receiving a belt strap 8 and on the opposite side, at the insertion end, lateral projections 9, 9'. The greatest distance of the two faces of projections 9, 9' which are most widely apart is smaller than the length of rectangular recess or aperture 4 (which always also means opening 4' in floor 1), so that tongue 5 is turned by 90 degress relative to the represented positions. inserted into aperture 4, turned back by 90 degress into the represented position, and pushed to one end or one narrow side of rectangular aperture 4. Then projections 9, 9' automatically engage reinforcing plate 2 from the bottom, because the above-mentioned greatest distance between the faces of the projections which are most widely apart is greater than the width of rectangular aperture 4. In the embodiment shown here, the width of tongue 5 is equal to the width of rectangular aperture 4. Toward to top or interior of the vehicle, tongue 5 then widens forming eyelet 7.

Then wedge 6 is placed with the end on which locking device 10 is arranged first into aperture 4 and opening 4' and driven with a hammer blow on top face 11 so far through aperture 4 until the upper surface of floor 1 facing the inside of the vehicle bears on nose 12. That is, wedge 6 cannot be driven further through aperture 4. When the bottom surface bears on nose 12, the state has been reached which is represented particularly in Fig. 1. Since the snap lock or locking device 10 consists of an inclined surface 13 with a snap tongue 14 attached obliquely to the outside at a distance therefrom, this snap tongue 14, which has come to bear more or less and at least partly on inclined surface 13, after it has been pressed through aperture 4, snaps out and thus engages the bottom outer edge of aperture 4 from the bottom. As shown in Fig. 1 wedge 6 can now be moved neither substantially upward, nor downward. Tongue mounting 5 is thus so secured that projections 9, 9' always bear against reinforcing plate 2 in the representation shown in Fig. 3, so that tongue mounting 5 cannot be pulled out of the represented position, even with a stronger pull on belt strap 8.

The easy assembly, the economical and simple manufacture and the reliable and safe operation of the subject of the invention is apparent from the foregoing.

According to another embodiment, not shown here, the tongue mounting can also have a U-cross section, and the wedge can extend into the inner space formed by the U. The advantage here is the possibility of making a small wedge with less plastic material. Besides, the outside dimension of the support is reduced, which has the advantage of fastening even in very narrow door jambs.

## Claims

1. Fastening arrangement including a locking wedge (6) and a holding device (5, 8) for straps (8) and the like on a preferably thin wall (1) in which at least one opening (4') for receiving the wedge (6) and the holding means (5) is provided, the wedge preventing manipulation of the holding device which would enable it to be withdrawn through the opening, characterized in that a reinforcing plate (2) is arranged on the side of the wall (1) remote from the strap (8), which plate (2) comprises an aperture (4) which is aligned with the opening (4') in the wall (1), that the wedge (6) has on one side as a locking means an inclined surface (13) and spaced therefrom a snap tongue (14) which extends over at least a part of the inclined surface (13) and that the aperture (4) in the reinforcing plate (2) is oblong, is rectangular or of U-shape and is fully filled by the holding device (5, 8) together with the wedge (6).

2. Fastening arrangement according to claim 1, characterized in that the wedge (6) comprises a nose (12, 24) opposite to the snap tongue (14).

3. Fastening arrangement according to claim 2, characterized in that the holding device (5, 8) comprises a tongue (5) provided with projections (9, 9') and is located next to the wedge (6) side by side, the tongue (5) of the holding device being connected to the strap (8).

4. Fastening arrangement according to claim 1, characterized in that the reinforcing plate (2) and the holding device (5, 8) are made of sheet metal and the wedge (6) of plastic.

## Patentansprüche

1. Befestigungsanordnung, einschleißlich eines Verriegelungskeils (6) und einer Haltevorrichtung (5, 8) für Bänder (8) und dergleichen an einer vorzugsweise dünnen Wand (1), in der mindestens eine Öffnung (4') für die Aufnahme des Keils (6) und der Halteeinrichtung (5) vorgesehen ist, wobei der Keil eine Manipulation der Haltevorrichtung verhindert, durch welche er durch die Öffnung herausgezogen werden könnte, dadurch gekennzeichnet, daß eine Verstärkungsplatte (2) auf der dem Band (8) abgewandten Seite der Wand (1) angeordnet ist und eine Öffnung (4) aufweist, die mit der Öffnung (4') in der Wand (1) in Flucht liegt, daß der Keil (6) auf einer Seite als Verriegelungseinrichtung eine Schrägfläche (13) und im Abstand von dieser eine Schnappzunge (14) aufweist, die sich über mindestens einen Teil der Schrägfläche (13) erstreckt, und daß die Öffnung (4) in der Verstärkungsplatte (2) länglich, rechteckig oder U-förmig ist und von der Haltevorrichtung (5, 8) zusammen mit dem Keil (6) voll ausgefüllt ist.

2. Befestigungsanordnung nach Anspruch 1, dadurch gekennzeichnet, daß der Keil (6) eine Nase (12, 24) gegenüber der Schnappzunge (14) aufweist.

3. Befestigungsanordnung nach Anspruch 2, dadurch gekennzeichnet, daß die Haltevorrichtung (5, 8) eine mit Vorsprüngen (9, 9') versehene Zunge (5) aufweist, die Seite an Seite neben dem Keil (6) angeordnet ist, wobei die Zunge (5) der Haltevorrichtung mit dem Band (8) verbunden ist.

4. Befestigungsanordnung nach Anspruch 1, dadurch gekennzeichnet, daß die Verstärkungsplatte (2) und die Haltevorrichtung (5, 8) aus Metallblech und der Keil (6) aus Kunststoff hergestellt sind.

## Revendications

1. Dispositif de fixation comportant un coin de blocage (6) et un dispositif de retenue (5, 8) pour des courroies (8) et analogues sur une paroi (1), de préférence mince, dans laquelle il est prévu au moins une ouverture (4') servant à recevoir le coin (6) et les moyens de retenue (5), le coin empêchant la manipulation du dispositif de retenue qui permettrait de la retirer par l'ouverture, caractérisé en ce qu'une plaque de renforcement (2) est disposée sur le côté de la paroi (1), éloignée de la courroie (8), laquelle plaque (2) comporte une ouverture (4) qui est alignée avec l'ouverture (4') ménagée dans la paroi (1), que le coin (6) possède, en tant que dispositif de blocage, sur une face, une surface inclinée (13) et, à distance de cette surface, une languette d'encliquetage (14) qui s'étend au-dessus d'au moins une partie de la surface inclinée (13), et que l'ouverture (4), ménagée dans la plaque de renforcement (2) est allongée, rectangulaire ou en forme de U et est totalement remplie par le dispositif de retenue (5, 8) ainsi que le coin (6).

2. Dispositif de fixation selon la revendication 1, caractérisé en ce que le coin (6) comporte un nez (12, 24) situé en vis-à-vis de la languette d'encliquetage (14).

3. Dispositif de fixation selon la revendication 2, caractérisé en ce que le dispositif de retenue (5, 8) comporte une languette (5) munie de parties en saillie (9, 9') et est situé près du coin (6), selon une disposition côte-à-côte, la languette (5) du dispositif de retenue étant raccordée à la courroie (8).

4. Dispositif de fixation selon la revendication 1, caractérisé en ce que la plaque de renforcement (2) et le dispositif de retenue (5, 8) sont sonstitués par un tôle métallique et que le coin (6) est constitué en une matière plastique.

Fig.1

Fig.2

Fig.3